# EUROPÄISCHE PATENTSCHRIFT

(11) **EP 3 475 921 B1**
(45) Veröffentlichungstag und Bekanntmachung des Hinweises auf die Patenterteilung: **27.01.2021**
(21) Anmeldenummer: 17755057.1
(22) Anmeldetag: 20.06.2017
(51) Int. Cl.: G06T 15/10, G06T 19/00, G06T 3/00

(54) **VERFAHREN UND FAHRZEUGSTEUERSYSTEM ZUM ERZEUGEN VON ABBILDUNGEN EINES UMFELDMODELLS UND ENTSPRECHENDES FAHRZEUG**
METHOD AND VEHICLE CONTROL SYSTEM FOR PRODUCING IMAGES OF A SURROUNDINGS MODEL, AND CORRESPONDING VEHICLE
PROCÉDÉ ET SYSTÈME DE COMMANDE DE VÉHICULE PERMETTANT DE CRÉER DES IMAGES D'UN MODÈLE D'ENVIRONNEMENT ET VÉHICULE CORRESPONDANT

(30) Priorität: 23.06.2016 DE 102016211227
(43) Veröffentlichungstag der Anmeldung: 01.05.2019
(73) Patentinhaber: Conti Temic microelectronic GmbH, 90411 Nürnberg (DE)
(72) Erfinder: MILZ, Stefan, 07929 Sallburg-Ebersdorf (DE); ARBEITER, Georg, 96328 Küps (DE)
(74) Vertreter: Metzger, Eva
(86) Internationale Anmeldenummer: PCT/DE2017/200054
(87) Internationale Veröffentlichungsnummer: WO 2017/220092

(56) Entgegenhaltungen:
- EP-A2- 1 170 173
- GB-A- 2 361 376
- US-A1- 2004 260 469
- US-A1- 2012 300 075
- Nick Michiels et al.: "Interactive Augmented Omnidirectional Video with Realistic Lighting" In: "Lecture Notes on Computer Science, Volume 8853", 17. September 2014 (2014-09-17), Springer - Lecture Notes on Computer Science, Augmented and Virtual Reality: First International Conference, AVR 2014. Revised Selected Papers: LNCS 8853, XP047302733, ISSN: 0302-9743 ISBN: 978-3-642-27168-7 Bd. 8853, Seiten 247-263, DOI: 10.1007/978-3-319-13969-2_19, Abschnitt 3
- MENGMENG YU ET AL: "A visual parking guidance for surround view monitoring system", 2015 IEEE INTELLIGENT VEHICLES SYMPOSIUM (IV), Juni 2015 (2015-06), Seiten 53-58, XP055418725, DOI: 10.1109/IVS.2015.7225662 ISBN: 978-1-4673-7266-4
- SEIYA SHIMIZU ET AL: "Wraparound View System for Motor Vehicles", FUJITSU-SCIENTIFIC AND TECHNICAL JOURNAL., Bd. 46, Januar 2010 (2010-01), Seiten 95-102, XP055349887, JP ISSN: 0016-2523

## Beschreibung

Die Erfindung betrifft ein Verfahren zum Erzeugen von perspektivisch korrigierten Abbildungen eines gespeicherten dreidimensionalen Umfeldmodells, ein Fahrzeugsteuersystem eines Fahrzeugs zum Erzeugen von perspektivisch korrigierten Abbildungen eines gespeicherten dreidimensionalen Umfeldmodells des Fahrzeugs und ein Fahrzeug mit einem Fahrzeugsteuersystem.

Umfeldmodelle, wie sie beispielsweise aus der WO 2013/060323 A1, der US 2004/0260469 A1, oder der US 2012/0300075 A1 bekannt sind, können dem Fahrer oder einem Fahrerassistenzsystem dabei helfen, das Fahrzeug zu steuern. Eine Einparkhilfe kann beispielsweise dem Fahrer auf einem Display ein Kamerabild anzeigen, auf welchem mittels Hilfslinien eine zu erwartende Trajektorie des Fahrzeugs eingezeichnet ist. Es ist von enormer Bedeutung, dass diese Hilfslinien auch bei einer Änderung der Kameraausrichtung an der korrekten Stelle angezeigt werden, um zu verhindern, dass der Fahrer die Fahrzeugbewegung falsch einschätzt und mit Objekten kollidiert.

Es ist daher Aufgabe der Erfindung, Abbildungen eines Umfeldmodells bereitzustellen, auf denen fahrrelevante Bereiche korrekt eingezeichnet sind.

Diese Aufgabe wird durch ein Verfahren zum Erzeugen von perspektivisch korrigierten Abbildungen eines gespeicherten dreidimensionalen Umfeldmodells eines Fahrzeugs mit den Merkmalen des Patentanspruchs 1, ein Fahrzeugsteuersystem eines Fahrzeugs zum Erzeugen von perspektivisch korrigierten Abbildungen eines gespeicherten dreidimensionalen Umfeldmodells mit den Merkmalen des Patentanspruchs 8 und ein Fahrzeug mit den Merkmalen des Patentanspruchs 15 gelöst.

Bevorzugte Ausführungsformen sind Gegenstand der Unteransprüche.

Gemäß einem ersten Aspekt betrifft die Erfindung demnach ein Verfahren zum Erzeugen von perspektivisch korrigierten Abbildungen eines gespeicherten dreidimensionalen Umfeldmodells eines Fahrzeugs. Mindestens ein Kamerabild wird durch eine Kameraeinrichtung des Fahrzeugs erzeugt und das erzeugte Kamerabild auf eine Projektionsfläche in dem gespeicherten dreidimensionalen Umfeldmodell des Fahrzeugs projiziert. Ein fahrrelevanter Bereich in dem gespeicherten dreidimensionalen Umfeldmodell wird gekennzeichnet. Das Verfahren umfasst weiter das Projizieren des gekennzeichneten Bereichs auf einen entsprechenden Projektionsflächenbereich der Projektionsfläche zum perspektivisch korrigierten Markieren eines dem gekennzeichneten Bereich entsprechenden Bildbereichs des auf die Projektionsfläche projizierten Kamerabilds, wobei der gekennzeichnete Bereich auf die Projektionsfläche projiziert wird, indem ein jeweiliger Punkt des gekennzeichneten Bereichs auf einen Schnittpunkt einer entsprechenden Verbindungslinie mit der Projektionsfläche abgebildet wird, wobei die Verbindungslinie diesen Punkt des gekennzeichneten Bereichs mit einem vorgegebenen Bezugspunkt des Umfeldmodells verbindet. Eine Abbildung der Projektionsfläche mit dem auf den Projektionsflächenbereich projizierten Bereich wird mittels einer in dem Umfeldmodell frei beweglichen virtuellen Kamera erzeugt und die erzeugte Abbildung ausgegeben.

Unter einem Fahrzeug wird insbesondere ein Kraftfahrzeug, insbesondere ein Personenkraftfahrzeug, ein Motorrad, ein E-Bike, ein Lastkraftwagen, ein Schiff oder Boot oder auch ein Flugzeug verstanden.

Unter einer Abbildung des Umfeldmodells wird ein mittels der virtuellen Kamera erzeugtes Abbild eines bestimmten räumlichen Teilbereichs des Umfeldmodells verstanden, wobei das Abbild von einer Position und Ausrichtung der virtuellen Kamera abhängt.

Unter der Projektionsfläche ist eine zweidimensionale Hyperfläche in dem dreidimensionalen Umfeldmodell zu verstehen, welche beliebig geformt und gekrümmt sein kann. Die Projektionsfläche kann eine flache Ebene, ein Kugelschalensegment, eine zylinderförmige Fläche oder eine paraboloidische oder hyperboloidische Fläche sein.

Unter einem fahrrelevanten Bereich wird ein Bereich des Umfeldmodells verstanden, welcher einem realen räumlichen Bereich des Fahrzeugumfelds des Fahrzeugs entspricht, der für das Navigieren des Fahrzeugs von Bedeutung ist. Der reale räumliche Bereich kann beispielsweise ein Raumbereich sein, in welchem sich Objekte oder Hindernisse befinden, welche für das Fahrzeug nicht befahrbar sind. Der reale räumliche Bereich kann auch einer Trajektorie des Fahrzeugs entsprechen, entlang welcher sich das Fahrzeug ohne Änderung der Fahrparameter bewegen würde. Weiter kann der reale räumliche Bereich ein bestimmter Abstandsbereich von dem Fahrzeug sein oder einer Parklücke entsprechen. Der reale räumliche Bereich kann ein nulldimensionaler punktförmiger Bereich, ein eindimensionaler, insbesondere auch gekrümmter, linienförmiger Bereich, eine zweidimensionale, möglicherweise gekrümmte Fläche oder auch ein dreidimensionaler Volumenbereich sein.

Dadurch, dass der gekennzeichnete Bereich direkt auf den Projektionsflächenbereich der Projektionsfläche projiziert wird, wird dieser direkt in dem auf die Projektionsfläche projizierten Kamerabild markiert. Verändert sich durch die Bewegung der virtuellen Kamera die Blickrichtung auf die Projektionsfläche, so bleibt der Projektionsflächenbereich dennoch an der korrekten Position, so dass Aberrationseffekte verhindert werden können. Derartige perspektivische Fehler werden somit durch das erfindungsgemäße Verfahren korrigiert.

Das erfindungsgemäße Verfahren verbessert die Darstellung des fahrrelevanten Bereichs. So wird das Steuern von Fahrfunktion des Fahrzeugs durch ein Fahrerassistenzsystem anhand der erzeugten Abbildungen durch die perspektivische Korrektur überhaupt erst ermöglicht, da andernfalls falsch eingezeichnete fahrrelevante Bereiche ausgewertet werden könnten. Das Verfahren verbessert somit die Präzision und Genauigkeit der erzeugten Abbildungen und erhöht damit auch in großem Maße die Sicherheit, da ja die Abbildungen perspektivisch korrigiert und von perspektivischen Fehlern frei sind.

Gemäß des erfindungsgemäßen Verfahrens wird der gekennzeichnete Bereich auf die Projektionsfläche projiziert, indem ein jeweiliger Punkt des gekennzeichneten Bereichs auf einen Schnittpunkt einer entsprechenden Verbindungslinie mit der Projektionsfläche abgebildet wird, wobei die Verbindungslinie diesen Punkt des gekennzeichneten Bereichs mit einem vorgegebenen Bezugspunkt des Umfeldmodells verbindet. Der Bezugspunkt bezeichnet somit eine mögliche Position der beweglichen virtuellen Kamera, von der aus gesehen der fahrrelevante Bereich durch Zentralprojektion auf die Projektionsfläche projiziert wird. Die Projektionsfläche liegt vorzugsweise zwischen dem Bezugspunkt und dem fahrrelevanten Bereich, jedoch kann sich auch der fahrrelevante Bereich zwischen dem Bezugspunkt und der Projektionsfläche befinden.

Gemäß einer bevorzugten Weiterbildung des Verfahrens weist die Kameraeinrichtung mindestens eine Fahrzeugkamera auf, wobei der Bezugspunkt des Umfeldmodells einer räumlichen Position derjenigen Fahrzeugkamera entspricht, welche das auf die Projektionsfläche abgebildete Kamerabild erzeugt. Somit wird sichergestellt, dass durch das Projizieren des gekennzeichneten Bereichs dieser an der korrekten Stelle der Projektionsfläche eingezeichnet wird, da eine aus der Perspektive des Bezugspunkts erzeugte Abbildung die realen Gegebenheiten mit dem an der korrekten Position befindlichen fahrrelevanten Bereich widerspiegelt.

Gemäß einer bevorzugten Weiterbildung des Verfahrens wird eine Kameraposition und/oder Kameraausrichtung der frei beweglichen virtuellen Kamera anhand von durch Fahrzeugsensoren des Fahrzeugs erzeugten Sensordaten und/oder erfassten Fahrzeugparametern des Fahrzeugs bestimmt. So kann etwa in Gefahrensituationen, wie beim Rückwärtsfahren oder Einbiegen in eine unübersichtliche Straße, die Position der virtuellen Kamera automatisch kontinuierlich bewegt werden, um somit Abbildungen aus einer für den Fahrer günstigen oder für das Fahrerassistenzsystem leicht auszuwertenden Blickrichtung auszugeben. Mögliche Fahrzeugparameter sind eine Geschwindigkeit oder Position des Fahrzeugs oder eine Winkelstellung von Rädern des Fahrzeugs.

Gemäß einer bevorzugten Ausführungsform des Verfahrens steuert ein Fahrerassistenzsystem anhand der ausgegebenen Abbildungen eine Fahrzeugfunktion des Fahrzeugs. Die Fahrzeugfunktionen können ein Ansteuern und Aktivieren oder Deaktivieren von Aktoren, wie etwa Blinkern oder Seitenspiegeln, oder auch das halbautonome oder autonome Beschleunigen, Abbremsen oder Lenken des Fahrzeugs umfassen.

Gemäß einer bevorzugten Ausführungsform des Verfahrens werden die ausgegebenen Abbildungen auf einer Anzeigevorrichtung einem Fahrer des Fahrzeugs angezeigt. Der Fahrer kann sich dadurch einen genauen Überblick über das Fahrzeugumfeld machen, wobei fahrrelevante Bereiche perspektivisch korrekt eingezeichnet sind.

Gemäß einer bevorzugten Weiterbildung des Verfahrens erfolgt das Kennzeichnen des fahrrelevanten Bereichs in dem gespeicherten dreidimensionalen Umfeldmodell anhand von durch Fahrzeugsensoren des Fahrzeugs erzeugten Sensordaten und/oder erfassten Fahrzeugparametern des Fahrzeugs. Beispielsweise können anhand von Radarsensoren Abstände von Objekten gemessen werden und dadurch fahrrelevante Bereiche des Umfeldmodells markiert werden, welche räumlichen Bereichen entsprechen, die durch Objekte belegt sind.

Gemäß einem weiteren Aspekt umfasst die Erfindung ein Fahrzeugsteuersystem eines Fahrzeugs zum Erzeugen von perspektivisch korrigierten Abbildungen eines gespeicherten dreidimensionalen Umfeldmodells des Fahrzeugs. Das Fahrzeugsteuersystem umfasst eine Kameraeinrichtung, welche dazu ausgebildet ist, mindestens ein Kamerabild zu erzeugen, sowie eine Recheneinrichtung. Die Recheneinrichtung ist dazu ausgebildet, das erzeugte Kamerabild auf eine Projektionsfläche in dem gespeicherten dreidimensionalen Umfeldmodell des Fahrzeugs zu projizieren, einen fahrrelevanten Bereich in dem gespeicherten dreidimensionalen Umfeldmodell zu kennzeichnen und den gekennzeichneten Bereich auf einen entsprechenden Projektionsflächenbereich der Projektionsfläche zu projizieren, indem ein jeweiliger Punkt des gekennzeichneten Bereichs auf einen Schnittpunkt einer entsprechenden Verbindungslinie mit der Projektionsfläche abgebildet wird, wobei die Verbindungslinie diesen Punkt des gekennzeichneten Bereichs mit einem vorgegebenen Bezugspunkt des Umfeldmodells verbindet. Die Recheneinrichtung ist somit dazu ausgebildet, einen dem gekennzeichneten Bereich entsprechenden Bildbereich des auf die Projektionsfläche projizierten Kamerabilds perspektivisch korrigiert zu markieren. Weiter ist die Recheneinrichtung dazu ausgebildet, eine Abbildung der Projektionsfläche mit dem auf den Projektionsflächenbereich projizierten Bereich mittels einer in dem Umfeldmodell frei beweglichen virtuellen Kamera zu erzeugen und die erzeugte Abbildung auszugeben.

Gemäß einer bevorzugten Weiterbildung des Fahrzeugsteuersystems weist die Kameraeinrichtung mindestens eine Fahrzeugkamera auf, wobei der Bezugspunkt des Umfeldmodells einer räumlichen Position derjenigen Fahrzeugkamera entspricht, welche das auf die Projektionsfläche abgebildete Kamerabild erzeugt.

Gemäß einer weiteren Ausführungsform umfasst das Fahrzeugsteuersystem mindestens einen Fahrzeugsensor des Fahrzeugs, welcher dazu ausgebildet ist, Sensordaten zu erzeugen und/oder Fahrzeugparameter des Fahrzeugs zu erfassen. Die Recheneinrichtung ist dazu ausgebildet, den fahrrelevanten Bereich in dem gespeicherten dreidimensionalen Umfeldmodell anhand der erzeugten Sensordaten und/oder anhand der erfassten Fahrzeugparameter des Fahrzeugs zu kennzeichnen.

Gemäß einer weiteren Ausführungsform des Fahrzeugsteuersystems ist die Recheneinrichtung dazu ausgebildet, eine Kameraposition und/oder Kameraausrichtung der frei beweglichen virtuellen Kamera anhand der erzeugten Sensordaten und/oder anhand der erfassten Fahrzeugparameter des Fahrzeugs zu bestimmen.

Gemäß einer bevorzugten Ausführungsform weist das Fahrzeugsteuersystem ein Fahrerassistenzsystem auf, welches dazu ausgebildet ist, anhand der ausgegebenen Abbildungen eine Fahrzeugfunktion des Fahrzeugs zu steuern.

Gemäß einer bevorzugten Ausführungsform des Fahrzeugsteuersystems weist die Ausgabeeinrichtung eine Anzeigevorrichtung auf, auf welcher die ausgegebenen Abbildungen einem Fahrer des Fahrzeugs anzeigbar sind.

Gemäß einem dritten Aspekt stellt die Erfindung ein Fahrzeug mit einem Fahrzeugsteuersystem bereit.

Die vorliegende Erfindung wird nachfolgend anhand der in den schematischen Figuren der Zeichnungen angegebenen Ausführungsbeispiele näher erläutert.

Es zeigen:
- Fig. 1: ein Flussdiagramm zur Erläuterung eines Verfahrens zum Erzeugen von perspektivisch korrigierten Abbildungen eines gespeicherten dreidimensionalen Umfeldmodells eines Fahrzeugs gemäß einer Ausführungsform der Erfindung;
- Fig. 2: eine Draufsicht auf ein beispielhaftes Szenario zur Erläuterung des erfindungsgemäßen Verfahrens;
- Fig. 3: eine schematische Ansicht eines Umfeldmodells zur Erläuterung des Projizierens eines gekennzeichneten Bereichs;
- Fig. 4: eine beispielhafte Abbildung aus einer ersten Kameraperspektive;
- Fig. 5: eine Ansicht eines Umfeldmodells zur Erläuterung des durch die Erfindung vermiedenen Aberrationseffektes;
- Fig. 6: eine Abbildung mit einem Aberrationsfehler;
- Fig. 7: eine schematische Ansicht des Umfeldmodells mit einer frei beweglichen virtuellen Kamera;
- Fig. 8: eine beispielhafte Abbildung aus einer zweiten Kameraperspektive;
- Fig. 9: ein schematisches Blockschaltbild zur Erläuterung eines Fahrzeugsteuersystems gemäß einer Ausführungsform der Erfindung; und
- Fig. 10: ein schematisches Blockschaltbild eines Fahrzeugs gemäß einer Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können mehrere Verfahrensschritte gleichzeitig durchgeführt werden. Des Weiteren können verschiedene Ausführungsformen beliebig miteinander kombiniert werden, soweit dies sinnvoll ist.

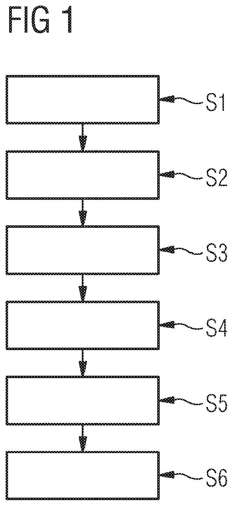

Figur 1 zeigt ein Flussdiagramm zur Erläuterung eines Verfahrens zum Erzeugen von perspektivisch korrigierten Abbildungen eines gespeicherten dreidimensionalen Umfeldmodells eines Fahrzeugs gemäß einer Ausführungsform der Erfindung.

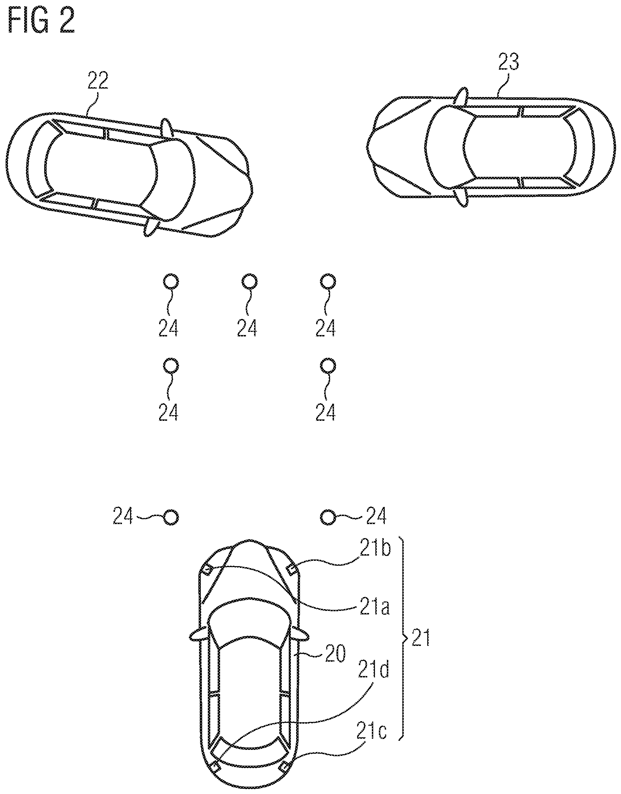

In Figur 2 ist ein beispielhaftes Szenario in einer Draufsicht illustriert, welches ein Fahrzeug 20 zeigt, das mit einer Kameraeinrichtung 21 versehen ist, welche um das Fahrzeug herum angebrachte Fahrzeugkameras 21a-21d aufweist. In einem Fahrzeugumfeld des Fahrzeugs 20 befinden sich Begrenzungspfosten 24 sowie weitere Verkehrsteilnehmer 22, 23.

In einem ersten Verfahrensschritt S1 wird durch die Kameraeinrichtung 21 des Fahrzeugs 20 mindestens ein Kamerabild des Fahrzeugumfelds des Fahrzeugs 20 erzeugt.

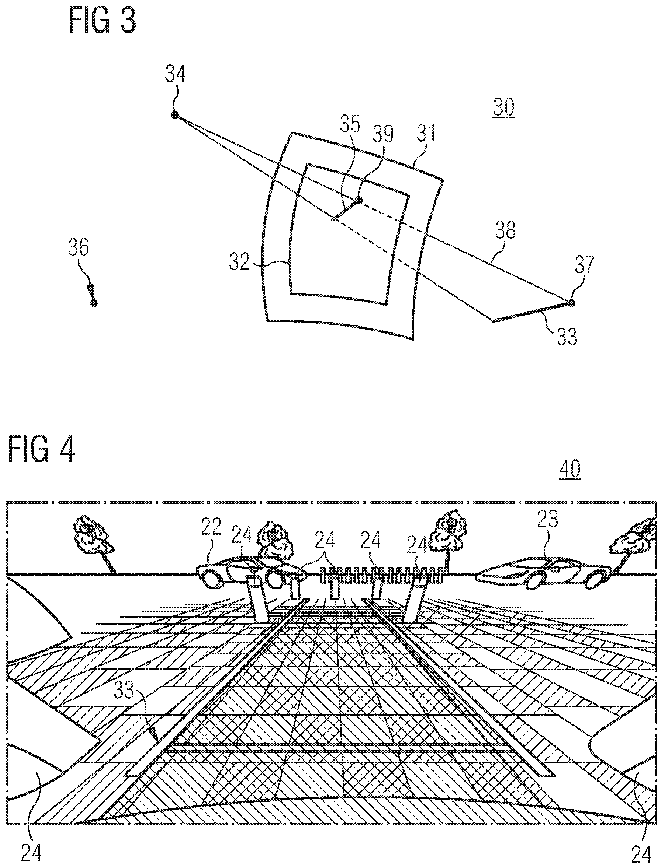

Weiter wird ein dreidimensionales Umfeldmodell 30 des Fahrzeugs 20 bereitgestellt, welches in Figur 3 schematisch illustriert ist. Das dreidimensionale Umfeldmodell ist vorzugsweise auf einem Speicher eines Fahrzeugsteuersystems des Fahrzeugs 20 gespeichert. In dem Umfeldmodell 30 wird eine Projektionsfläche 31 bestimmt, welche beispielsweise zylindrisch um einen Koordinatenursprung 36 des Umfeldmodells 30 herum angeordnet ist, wobei der Koordinatenursprung 36 einer Fahrzeugposition des Fahrzeugs 20 entspricht. Die Projektionsfläche 31 kann auch einer um den Koordinatenursprung 36 herum angeordnete Kugeloberfläche oder einem Teilbereich einer Kugeloberfläche entsprechen. Die Form der Projektionsfläche ist nicht auf die genannten Beispiele beschränkt.

In einem zweiten Verfahrensschritt S2 wird das erzeugte Kamerabild 32 auf die Projektionsfläche 31 projiziert.

In einem weiteren Verfahrensschritt S3 wird ein fahrrelevanter Bereich 33 in dem gespeicherten dreidimensionalen Umfeldmodell gekennzeichnet. Das Kennzeichnen S3 erfolgt vorzugsweise automatisch, insbesondere anhand von Sensordaten und/oder Fahrzeugparametern des Fahrzeugs, welche vorzugsweise von mindestens einem Fahrzeugsensor des Fahrzeugs 20 erzeugt bzw. ermittelt werden. So wird beispielsweise ein fahrrelevanter Bereich 33, welcher einer zu erwartenden Trajektorie des Fahrzeugs 20 entspricht, anhand von einer von dem mindestens einen Fahrzeugsensor gemessenen Winkelstellung von Rädern des Fahrzeugs bestimmt und in dem Umfeldmodell gekennzeichnet. Der fahrrelevante Bereich 33 kann in dem Umfeldmodell farbig markiert werden. Weiter wird ein Bezugspunkt 34 des Umfeldmodells 30 markiert, welcher einer räumlichen Position derjenigen Fahrzeugkamera entspricht, welche das auf die Projektionsfläche 31 abgebildete Kamerabild 32 erzeugt.

Mit Bezug auf diesen Bezugspunkt 34 wird in einem weiteren Verfahrensschritt S4 der gekennzeichnete fahrrelevante Bereich 33 auf einen entsprechenden Projektionsflächenbereich 35 der Projektionsfläche 31 projiziert. Der Projektionsflächenbereich 35 ist ein dem gekennzeichneten Bereich 33 entsprechender Bildbereich des auf die Projektionsfläche projizierten Kamerabildes, welcher somit in einer perspektivisch korrigierten Weise markiert wird. Hierzu wird für jeden Punkt 37 des gekennzeichneten Bereichs 33 ein Schnittpunkt 39 der Projektionsfläche 31 mit einer Verbindungslinie 38 bestimmt, wobei die Verbindungslinie 38 diesen Punkt 37 mit dem Bezugspunkt 34 verbindet.

In einem weiteren Verfahrensschritt S5 wird eine Abbildung der Projektionsfläche 31 mit dem auf den Projektionsflächenbereich 35 projizierten Bereich 33 mittels einer in dem Umfeldmodell 30 frei beweglichen virtuellen Kamera erzeugt und in einem anschließenden Verfahrensschritt S6 wird die erzeugte Abbildung ausgegeben.

Figur 4 zeigt eine erzeugte erste Abbildung 40, welche mittels einer an dem Bezugspunkt 34 befindlichen virtuellen Kamera aufgenommen wird. Der gekennzeichnete fahrrelevante Bereich 33 befindet sich hierbei an der korrekten Position und zeigt dem Fahrer des Fahrzeugs 21 eine Trajektorie an, entlang welcher sich das Fahrzeug bei Beibehaltung der Fahrparameter bewegen wird.

Ein wesentlicher Punkt der Erfindung liegt darin, dass der fahrrelevante Bereich auf die Projektionsfläche projiziert wird und eine Abbildung der Projektionsfläche mit dem auf den Projektionsflächenbereich projizierten Bereich erfolgt. Dies unterscheidet sich von einer Abbildung, welche durch Aufnehmen der Projektionsfläche und des fahrrelevanten Bereichs selbst erfolgen würde.

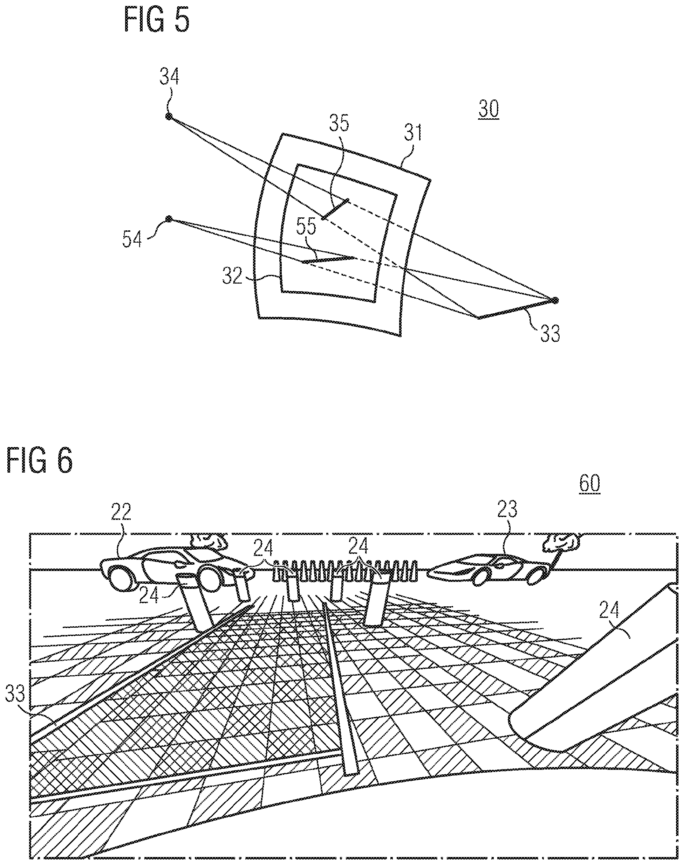

Zum Vergleich ist in Figur 5 ein derartiges Verfahren illustriert, welches nicht Teil der Erfindung ist. Wird die virtuelle Kamera von dem Bezugspunkt 34 zu einem vorgegebenen Kameraraumpunkt 54 verschoben, und erfasst diese ein Bild der Projektionsfläche 31 sowie des gekennzeichneten fahrrelevanten Bereichs 33, so erscheint in einer entsprechenden Abbildung der fahrrelevante Bereich 33 an einer verschobenen Position 55 des projizierten Kamerabilds 32. Dies ist in Figur 6 illustriert, welches eine zweite Abbildung 60 zeigt, welche mit diesem nicht von der Erfindung umfassten Verfahren aufgenommen wird. Zu erkennen ist, dass bei dieser Verschiebung der virtuellen Kamera zu dem Kameraraumpunkt 54 eine Verschiebung des abgebildeten fahrrelevanten Bereichs 33 nicht mit einer Verschiebung des Bildausschnittes selbst übereinstimmt. Aufgrund dieses Aberrationseffekts wird im genannten Beispiel die Trajektorie des Fahrzeugs nicht korrekt angezeigt.

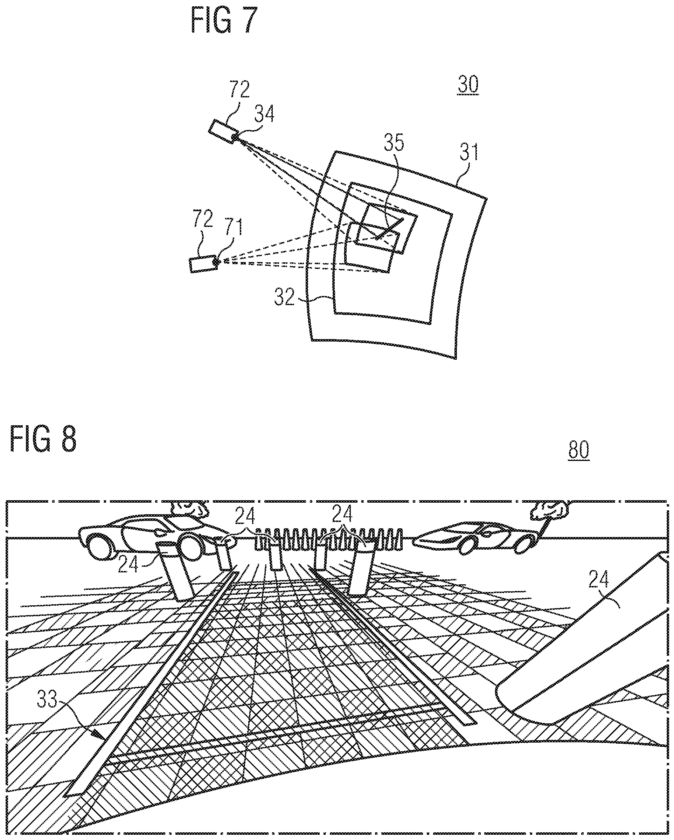

Im Gegensatz dazu erläutert Figur 7 das Erzeugen von Abbildungen der Projektionsfläche 31 mit dem auf den Projektionsflächenbereich 35 projizierten Bereich 33 gemäß der Erfindung. Eine virtuelle Kamera 72 ist hierbei beispielhaft an dem Bezugspunkt 34 und an einem weiteren Kameraraumpunkt 71 eingezeichnet. Unabhängig von einer Kameraposition der virtuellen Kamera 72 und von einer Ausrichtung der virtuellen Kamera 72 erscheint der Projektionsflächenbereich 35 stets an derselben, das heißt korrekten Position des Kamerabildes 32 auf der Projektionsfläche 31.

Figur 8 zeigt beispielhaft eine dritte Abbildung 80, welche mittels der virtuellen Kamera 72 an dem weiteren Kameraraumpunkt 71 aufgenommen wurde. Wie zu sehen ist, befindet sich nun der fahrrelevante Bereich 33 wiederum an der richtigen Position der erzeugten Abbildung.

Das Verfahren erlaubt dadurch die perspektivische Korrektur der Abbildung durch Verhinderung eines Aberrationseffektes.

Gemäß einer weiteren Ausführungsform wird die Kameraposition und/oder Kameraausrichtung der frei beweglichen virtuellen Kamera 72 anhand von durch Fahrzeugsensoren des Fahrzeugs 20 erzeugten Sensordaten und/oder bestimmten Fahrzeugparametern des Fahrzeugs 20 bestimmt. So kann die Kameraposition der virtuellen Kamera kontinuierlich und gleichmäßig verschoben werden und es können entsprechende kontinuierliche Abbildungen erzeugt werden.

Die erzeugten Abbildungen werden gemäß einer Ausführungsform an ein Fahrerassistenzsystem ausgegeben, welches anhand der ausgegebenen Abbildungen eine Fahrzeugfunktion des Fahrzeugs steuert. Beispielsweise kann eine für das Fahrerassistenzsystem vorteilhafte Kameraansicht gewählt werden, welche sich durch eine optimale perspektivische Ansicht auszeichnet, wodurch die benötigte Rechenzeit und Rechenleistung des Fahrerassistenzsystems zur Auswertung reduziert werden kann. Ausgehend von dieser Kameraperspektive kann das Fahrerassistenzsystem das Fahrzeug teilautonom oder autonom steuern. Die korrekt eingezeichneten fahrrelevanten Bereiche ermöglichen erst das exakte Steuern des Fahrzeugs durch das Fahrerassistenzsystem.

Gemäß einer bevorzugten Weiterbildung werden die ausgegebenen Abbildungen auf einer Anzeigevorrichtung des Fahrzeugs 20 einem Fahrer des Fahrzeugs 20 angezeigt.

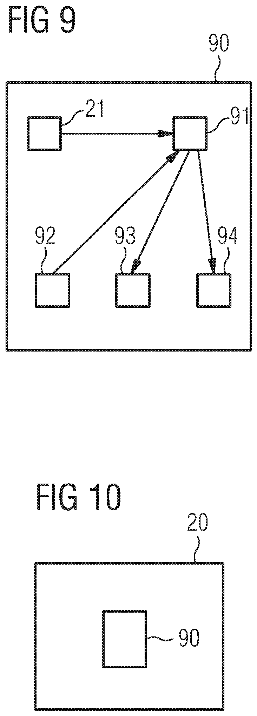

Figur 9 zeigt ein Blockdiagramm zur Erläuterung eines Fahrzeugsteuersystems 90 eines Fahrzeugs 20 zum Erzeugen von perspektivisch korrigierten Abbildungen eines gespeicherten dreidimensionalen Umfeldmodells 30 des Fahrzeugs 20. Das Fahrzeugsteuersystem 90 weist eine Kameraeinrichtung 21 auf, die dazu ausgebildet ist, mindestens ein Kamerabild 32 zu erzeugen. Die Kameraeinrichtung 21 kann eine Vielzahl von Fahrzeugkameras 21a-21d umfassen, welche eine Surround-View-Ansicht der Fahrzeugumgebung des Fahrzeugs 20 ermöglichen. Weiter weist das Fahrzeugsteuersystem eine Speichereinrichtung auf, auf welcher ein dreidimensionales Umfeldmodell des Fahrzeugs 20 gespeichert ist. Gemäß einer weiteren Ausführungsform kann das dreidimensionale Umfeldmodell 30 dem Fahrzeugsteuersystem auch über eine Schnittstelle zur Verfügung gestellt werden.

Das Fahrzeugsteuersystem 90 umfasst eine Recheneinrichtung 91, welche dazu ausgebildet ist, das erzeugte Kamerabild auf eine Projektionsfläche 31 in dem gespeicherten dreidimensionalen Umfeldmodell des Fahrzeugs zu projizieren. Die Projektionsfläche 31 kann vorgegeben sein oder von der Recheneinrichtung 91 selbst bestimmt werden.

Weiter ist die Recheneinrichtung 91 dazu ausgebildet, einen fahrrelevanten Bereich in dem gespeicherten dreidimensionalen Umfeldmodell zu kennzeichnen. Dazu kann das Fahrzeugsteuersystem 90 optional mindestens einen Fahrzeugsensor 93 aufweisen, welcher dazu ausgebildet ist, Sensordaten zu erzeugen und/oder Fahrzeugparameter des Fahrzeugs 20 zu erfassen. Derartige Fahrzeugsensoren 93 umfassen Radarsysteme, Lidarsysteme, optische Kameras, Infrarotkameras oder Lasersysteme. Der fahrrelevante Bereich, welcher beispielsweise einer Parkbox, einer Trajektorie des Fahrzeugs oder einem Hindernis entspricht, kann anhand der Sensordaten von der Recheneinrichtung 91 erkannt werden und in das Umfeldmodell 30 eingetragen und gekennzeichnet werden.

Die Recheneinrichtung 91 ist weiter dazu ausgebildet, den gekennzeichneten Bereich 33 auf einen entsprechenden Projektionsflächenbereich 35 der Projektionsfläche 31 zu projizieren. Die Recheneinrichtung 91 markiert dadurch in einer perspektivisch korrigierten Weise ein dem gekennzeichneten Bereich 33 entsprechenden Bildbereich des auf die Projektionsfläche 31 projizierten Kamerabilds 32. Weiter ist die Recheneinrichtung 91 dazu ausgebildet, eine Abbildung der Projektionsfläche mit dem auf den Projektionsflächenbereich 35 projizierten Bereich 33 mittels einer in dem Umfeldmodell 30 frei beweglichen virtuellen Kamera 72 zu erzeugen.

Das Fahrzeugsteuersystem 90 weist weiter eine Ausgabeeinrichtung 92 auf, welche dazu ausgebildet ist, die erzeugte Abbildung auszugeben. Die Ausgabeeinrichtung 92 kann eine Schnittstelle, insbesondere eine Kabelverbindung, eine USB-Schnittstelle oder eine kabellose Schnittstelle aufweisen. Die erzeugten Abbildungen sind insbesondere über die Ausgabeeinrichtung 92 an weitere Geräte oder via Car-to-Car-Kommunikation an weitere Fahrzeuge übertragbar.

Optional umfasst das Fahrzeugsteuersystem 90 weiter ein Fahrerassistenzsystem 94, welches dazu ausgebildet ist, anhand der ausgegebenen Abbildungen eine Fahrzeugfunktion des Fahrzeugs 20 zu steuern.

Gemäß einer bevorzugten Weiterbildung weist die Ausgabeeinrichtung 92 eine Anzeigevorrichtung auf, welche in einem Innenraum des Fahrzeugs 20 angeordnet ist und die ausgegebenen Abbildungen einem Fahrer des Fahrzeugs 20 anzeigt.

Figur 10 zeigt ein beispielhaftes Blockdiagramm eines Fahrzeugs 20 mit einem Fahrzeugsteuersystem 90 gemäß einer Ausführungsform der Erfindung. Das Fahrzeugsteuersystem 90 kann hierbei eines der oben genannten Ausführungsformen sein.

### BEZUGSZEICHENLISTE

- 20: Fahrzeug
- 21: Kameraeinrichtung
- 21a bis 21d: Fahrzeugkameras
- 22, 23: weitere Verkehrsteilnehmer
- 24: Begrenzungspfosten
- 30: Umfeldmodell
- 31: Projektionsfläche
- 32: Kamerabild
- 33: fahrrelevanter Bereich
- 34: Bezugspunkt
- 35: Projektionsflächenbereich
- 36: Koordinatenursprung
- 37: Punkt des gekennzeichneten Bereichs
- 38: Verbindungslinie
- 39: Schnittpunkt
- 40: erste Abbildung
- 54: Kameraraumpunkt
- 55: verschobene Position
- 60: zweite Abbildung
- 71: weiterer Kameraraumpunkt
- 72: virtuelle Kamera
- 80: dritte Abbildung
- 90: Fahrzeugsteuersystem
- 91: Recheneinrichtung
- 92: Ausgabeeinrichtung
- 93: Fahrzeugsensoren
- 94: Fahrerassistenzsystem

## Patentansprüche

1. Verfahren zum Erzeugen von perspektivisch korrigierten Abbildungen eines gespeicherten dreidimensionalen Umfeldmodells (30) eines Fahrzeugs (20), mit den Schritten:
Erzeugen (S1) mindestens eines Kamerabildes (32) durch eine Kameraeinrichtung (21) des Fahrzeugs (20);
Projizieren (S2) des erzeugten Kamerabildes (32) auf eine Projektionsfläche (31) in dem gespeicherten dreidimensionalen Umfeldmodell (30) des Fahrzeugs (20);
Kennzeichnen (S3) eines fahrrelevanten Bereichs (33) in dem gespeicherten dreidimensionalen Umfeldmodell (30);
Projizieren (S4) des gekennzeichneten Bereichs (33) auf einen entsprechenden Projektionsflächenbereich (35) der Projektionsfläche (31) zum perspektivisch korrigierten Markieren eines dem gekennzeichneten Bereich (33) entsprechenden Bildbereichs des auf die Projektionsfläche (31) projizierten Kamerabilds (32), wobei der gekennzeichnete Bereich auf die Projektionsfläche (31) projiziert wird, indem ein jeweiliger Punkt (37) des gekennzeichneten Bereichs (33) auf einen Schnittpunkt (39) einer entsprechenden Verbindungslinie (38) mit der Projektionsfläche (31) abgebildet wird, wobei die Verbindungslinie (38) diesen Punkt (37) des gekennzeichneten Bereichs mit einem vorgegebenen Bezugspunkt (34) des Umfeldmodells (30) verbindet;
Erzeugen (S5) einer Abbildung der Projektionsfläche (31) mit dem auf den Projektionsflächenbereich (35) projizierten Bereich (33) mittels einer in dem Umfeldmodell (30) frei beweglichen virtuellen Kamera (72); und
Ausgeben (S6) der erzeugten Abbildung.

2. Verfahren nach Anspruch 1, wobei die Kameraeinrichtung (21) mindestens eine Fahrzeugkamera (21a-21d) aufweist und wobei der Bezugspunkt (34) des Umfeldmodells (30) einer räumlichen Position derjenigen Fahrzeugkamera entspricht, welche das auf die Projektionsfläche (31) abgebildete Kamerabild (32) erzeugt.

3. Verfahren nach einem der vorangehenden Ansprüche, wobei eine Kameraposition und/oder Kameraausrichtung der frei beweglichen virtuellen Kamera (72) anhand von durch Fahrzeugsensoren (93) des Fahrzeugs (20) erzeugten Sensordaten und/oder erfassten Fahrzeugparametern des Fahrzeugs (20) bestimmt wird.

4. Verfahren nach einem der vorangehenden Ansprüche, wobei ein Fahrerassistenzsystem (94) anhand der ausgegebenen Abbildungen eine Fahrzeugfunktion des Fahrzeugs (20) steuert.

5. Verfahren nach einem der vorangehenden Ansprüche, wobei die ausgegebenen Abbildungen auf einer Anzeigevorrichtung einem Fahrer des Fahrzeugs (20) angezeigt werden.

6. Verfahren nach einem der vorangehenden Ansprüche, wobei das Kennzeichnen des fahrrelevanten Bereichs in dem gespeicherten dreidimensionalen Umfeldmodell (30) anhand von durch Fahrzeugsensoren (93) des Fahrzeugs (20) erzeugten Sensordaten und/oder erfassten Fahrzeugparametern des Fahrzeugs (20) erfolgt.

7. Fahrzeugsteuersystem (90) eines Fahrzeugs (20) zum Erzeugen von perspektivisch korrigierten Abbildungen eines gespeicherten dreidimensionalen Umfeldmodells (30) des Fahrzeugs (20), mit:
einer Kameraeinrichtung (21), welche dazu ausgebildet ist, mindestens ein Kamerabild (32) zu erzeugen;
einer Recheneinrichtung (91), welche dazu ausgebildet ist:
das erzeugte Kamerabild (32) auf eine Projektionsfläche (31) in dem gespeicherten dreidimensionalen Umfeldmodell (30) des Fahrzeugs (20) zu projizieren,
einen fahrrelevanten Bereichs (33) in dem gespeicherten dreidimensionalen Umfeldmodell (30) zu kennzeichnen,
den gekennzeichneten Bereich auf einen entsprechenden Projektionsflächenbereich (35) der Projektionsfläche (31) zu projizieren, zum perspektivisch korrigierten Markieren eines dem gekennzeichneten Bereich (33) entsprechenden Bildbereichs des auf die Projektionsfläche (31) projizierten Kamerabilds (32), indem sie einen jeweiligen Punkt (37) des gekennzeichneten Bereichs (33) auf einen Schnittpunkt (39) einer entsprechenden Verbindungslinie (38) mit der Projektionsfläche (31) abbildet, wobei die Verbindungslinie (38) diesen Punkt (37) des gekennzeichneten Bereichs (33) mit einem vorgegebenen Bezugspunkt (34) des Umfeldmodells (30) verbindet und
eine Abbildung der Projektionsfläche (31) mit dem auf den Projektionsflächenbereich (35) projizierten Bereich (33) mittels einer in dem Umfeldmodell (30) frei beweglichen virtuellen Kamera (72) zu erzeugen; und
einer Ausgabeeinrichtung (92), welche dazu ausgebildet ist, die erzeugte Abbildung auszugeben.

8. Fahrzeugsteuersystem (90) nach Anspruch 7, wobei die Kameraeinrichtung (21) mindestens eine Fahrzeugkamera (21a-21d) aufweist und wobei der Bezugspunkt (34) des Umfeldmodells (30) einer räumlichen Position derjenigen Fahrzeugkamera entspricht, welche das auf die Projektionsfläche (31) abgebildete Kamerabild (32) erzeugt.

9. Fahrzeugsteuersystem (90) nach einem der Ansprüche 7 oder 8,
mit mindestens einem Fahrzeugsensor (93) des Fahrzeugs (20) zum Erzeugen von Sensordaten und/oder zum Erfassen von Fahrzeugparametern des Fahrzeugs (20);
wobei die Recheneinrichtung (91) weiter dazu ausgebildet ist, den fahrrelevanten Bereichs in dem gespeicherten dreidimensionalen Umfeldmodell (30) anhand der erzeugten Sensordaten und/oder anhand der erfassten Fahrzeugparameter des Fahrzeugs (20) zu kennzeichnen.

10. Fahrzeugsteuersystem (90) nach Anspruch 9, wobei die Recheneinrichtung (91) weiter dazu ausgebildet ist, eine Kameraposition und/oder Kameraausrichtung der frei beweglichen virtuellen Kamera (72) anhand der erzeugten Sensordaten und/oder anhand der erfassten Fahrzeugparameter des Fahrzeugs (20) zu bestimmen.

11. Fahrzeugsteuersystem (90) nach einem der Ansprüche 7 bis 10, mit einem Fahrerassistenzsystem (93), welches dazu ausgebildet ist, anhand der ausgegebenen Abbildungen eine Fahrzeugfunktion des Fahrzeugs (20) zu steuern.

12. Fahrzeugsteuersystem (90) nach einem der Ansprüche 7 bis 11, wobei die Ausgabeeinrichtung (92) eine Anzeigevorrichtung umfasst, auf der die ausgegebenen Abbildungen einem Fahrer des Fahrzeugs (20) anzeigbar sind.

13. Fahrzeug (20) mit einem Fahrzeugsteuersystem (90) gemäß einem der Ansprüche 7 bis 12.

## Claims

1. Method for producing perspectively corrected images of a stored three-dimensional vicinity model (30) of a vehicle (20), comprising the steps of:
producing (S1) at least one camera image (32) by way of a camera device (21) of the vehicle (20);
projecting (S2) the produced camera image (32) onto a projection surface (31) in the stored three-dimensional vicinity model (30) of the vehicle (20);
indicating (S3) a driver-relevant region (33) in the stored three-dimensional vicinity model (30);
projecting (S4) the indicated region (33) onto a corresponding projection surface region (35) of the projection surface (31) for marking, in a perspectively corrected manner, an image region, which corresponds to the indicated region (33), of the camera image (32) that is projected onto the projection surface (31), wherein the indicated region is projected onto the projection surface (31) by virtue of the fact that a respective point (37) of the indicated region (33) is imaged onto an intersection point (39) of a corresponding connection line (38) with the projection surface (31), wherein the connection line (38) connects said point (37) of the indicated region to a specified reference point (34) of the vicinity model (30);
producing (S5) an image of the projection surface (31) with the region (33) projected onto the projection surface region (35) using a virtual camera (72) that is freely movable in the vicinity model (30); and
outputting (S6) the image produced.

2. Method according to Claim 1, wherein the camera device (21) has at least one vehicle camera (21a-21d) and wherein the reference point (34) of the vicinity model (30) corresponds to a spatial position of the vehicle camera that produces the camera image (32) that is imaged onto the projection surface (31) .

3. Method according to either of the preceding claims, wherein a camera position and/or camera orientation of the freely movable virtual camera (72) is determined on the basis of sensor data and/or captured vehicle parameters of the vehicle (20) generated by vehicle sensors (93) of the vehicle (20) .

4. Method according to one of the preceding claims, wherein a driver assistance system (94) controls a vehicle function of the vehicle (20) on the basis of the output images.

5. Method according to one of the preceding claims, wherein the output images are displayed for a driver of the vehicle (20) on a display apparatus.

6. Method according to one of the preceding claims, wherein indicating the driver-relevant region in the stored three-dimensional vicinity model (30) is effected on the basis of sensor data and/or captured vehicle parameters of the vehicle (20) generated by vehicle sensors (93) of the vehicle (20).

7. Vehicle control system (90) of a vehicle (20) for producing perspectively corrected images of a stored three-dimensional vicinity model (30) of the vehicle (20), having:
a camera device (21) embodied for producing at least one camera image (32);
a computational device (91) embodied for:
projecting the produced camera image (32) onto a projection surface (31) in the stored three-dimensional vicinity model (30) of the vehicle (20),
indicating a driver-relevant region (33) in the stored three-dimensional vicinity model (30),
projecting the indicated region onto a corresponding projection surface region (35) of the projection surface (31) for marking, in a perspectively corrected manner, an image region, which corresponds to the indicated region (33), of the camera image (32) that is projected onto the projection surface (31) by virtue of the fact that it images a respective point (37) of the indicated region (33) onto an intersection point (39) of a corresponding connection line (38) with the projection surface (31), wherein the connection line (38) connects said point (37) of the indicated region (33) to a specified reference point (34) of the vicinity model (30), and
producing an image of the projection surface (31) with the region (33) projected onto the projection surface region (35) by means of a virtual camera (72) that is freely movable in the vicinity model (30); and
an output device (92) embodied for outputting the produced image.

8. Vehicle control system (90) according to Claim 7, wherein the camera device (21) has at least one vehicle camera (21a-21d) and wherein the reference point (34) of the vicinity model (30) corresponds to a spatial position of the vehicle camera that produces the camera image (32) that is imaged onto the projection surface (31).

9. Vehicle control system (90) according to one of Claims 7 or 8,
having at least one vehicle sensor (93) of the vehicle (20) for generating sensor data and/or for capturing vehicle parameters of the vehicle (20);
wherein the computational device (91) is furthermore embodied for indicating the driver-relevant region in the stored three-dimensional vicinity model (30) on the basis of the generated sensor data and/or on the basis of the captured vehicle parameters of the vehicle (20).

10. Vehicle control system (90) according to Claim 9, wherein the computational device (91) is furthermore embodied for determining a camera position and/or camera orientation of the freely movable virtual camera (72) on the basis of the generated sensor data and/or on the basis of the captured vehicle parameters of the vehicle (20).

11. Vehicle control system (90) according to one of Claims 7 to 10, having a driver assistance system (93) embodied for controlling a vehicle function of the vehicle (20) on the basis of the output images.

12. Vehicle control system (90) according to one of Claims 7 to 11, wherein the output device (92) comprises a display apparatus on which the output images are able to be displayed for a driver of the vehicle (20).

13. Vehicle (20) having a vehicle control system (90) according to one of Claims 7 to 12.

## Revendications

1. Procédé de formation de représentations à perspective corrigée d'un modèle tridimensionnel (30), conservé en mémoire, de l'environnement d'un véhicule (20), le procédé comportant les étapes qui consistent à :
- former (S1) une ou plusieurs images de caméra (32) à l'aide d'un dispositif de caméras (21) du véhicule (20),
- projeter (S2) l'image de caméra (32) ainsi formée sur une surface de projection (31), dans le modèle tridimensionnel (30), conservé en mémoire, de l'environnement du véhicule (20),
- identifier (S3) dans le modèle tridimensionnel (30), conservé en mémoire, de l'environnement une partie (33) concernée par la conduite du véhicule,
- projeter (S4) la partie identifiée (33) sur une partie correspondante (35) de la surface de projection (31) pour repérer avec correction de la perspective la partie de l'image de caméra (32) projetée sur la surface de projection (31) qui correspond à la partie (33) concernée par la conduite du véhicule en représentant l'image d'un point (37) de la partie (33) concernée par la conduite du véhicule au point d'intersection (39) d'une ligne de liaison (38) correspondante avec la surface de projection (31), la ligne de liaison (38) reliant ce point (37) de la partie identifiée à un point de référence (34) prédéterminé du modèle tridimensionnel (30), conservé en mémoire, de l'environnement,
- former (S5) une représentation de la surface de projection (31) contenant la partie (33) concernée par la conduite du véhicule projetée sur la partie correspondante (35) de la surface de projection au moyen d'une caméra virtuelle (72) librement mobile dans le modèle tridimensionnel (30), conservé en mémoire, de l'environnement et
- délivrer (S6) la représentation ainsi formée.

2. Procédé selon la revendication 1, dans lequel le dispositif de caméras (21) présente une ou plusieurs caméras (21a - 21d) du véhicule et le point de référence (34) du modèle tridimensionnel (30), conservé en mémoire, de l'environnement correspond à une position spatiale de la caméra du véhicule qui forme l'images de caméra (32) représentée sur la surface de projection (31).

3. Procédé selon l'une des revendications précédentes, dans lequel la position et/ou l'orientation de la caméra virtuelle (72) librement mobile sont déterminées à l'aide de données générées par des capteurs (93) du véhicule (20) et/ou à l'aide de paramètres du véhicule (20) qui ont été saisis.

4. Procédé selon l'une des revendications précédentes, dans lequel un système (94) d'assistance au conducteur commande une fonction du véhicule (20) à l'aide des représentations qui ont été formées.

5. Procédé selon l'une des revendications précédentes, dans lequel les représentations qui ont été formées sont présentées au conducteur du véhicule (20) sur un dispositif d'affichage.

6. Procédé selon l'une des revendications précédentes, dans lequel l'identification de la partie concernée par la conduite du véhicule dans le modèle tridimensionnel (30), conservé en mémoire, de l'environnement s'effectue à l'aide de données générées par des capteurs (93) du véhicule (20) et/ou à l'aide de paramètres du véhicule (20) qui ont été saisis.

7. Système (90) de commande d'un véhicule (20), servant à former des représentations à perspective corrigée d'un modèle tridimensionnel (30), conservé en mémoire, de l'environnement d'un véhicule (20), le système comprenant :
- un dispositif de caméras (21) configuré pour former une ou plusieurs images de caméra (32),
- un dispositif de calcul (91) configuré pour :
projeter sur une surface de projection (31) dans le modèle tridimensionnel (30), conservé en mémoire, de l'environnement du véhicule (20),
identifier une partie (33) concernée par la conduite du véhicule dans le modèle tridimensionnel (30), conservé en mémoire, de l'environnement,
projeter la partie identifiée (33) sur une partie correspondante (35) de la surface de projection (31) pour repérer avec correction de la perspective la partie de l'image de caméra (32) projetée sur la surface de projection (31) qui correspond à la partie (33) concernée par la conduite du véhicule en représentant l'image d'un point (37) de la partie (33) concernée par la conduite du véhicule au point d'intersection (39) d'une ligne de liaison (38) correspondante avec la surface de projection (31), la ligne de liaison (38) reliant ce point (37) de la partie identifiée à un point de référence (34) prédéterminé du modèle tridimensionnel (30), conservé en mémoire, de l'environnement,
former une représentation de la surface de projection (31) contenant la partie (33) concernée par la conduite du véhicule projetée sur la partie correspondante (35) de la surface de projection au moyen d'une caméra virtuelle (72) librement mobile dans le modèle tridimensionnel (30), conservé en mémoire, de l'environnement et
- un dispositif de sortie (92) configuré pour délivrer la représentation ainsi formée.

8. Système de commande (90) selon la revendication 7, dans lequel le dispositif de caméras (21) présente une ou plusieurs caméras (21a - 21d) du véhicule et le point de référence (34) du modèle tridimensionnel (30) de l'environnement correspond à une position spatiale de la caméra du véhicule qui forme l'images de caméra (32) représentée sur la surface de projection (31).

9. Système de commande (90) selon l'une des revendications 7 ou 8, présentant
un ou plusieurs capteurs (93) du véhicule (20) générant des données et/ou saisissant des paramètres du véhicule (20),
le dispositif de calcul (91) étant en outre configuré pour identifier dans le modèle tridimensionnel (30), conservé en mémoire, de l'environnement la partie concernée par la conduite du véhicule à l'aide des données générées par les capteurs et/ou à l'aide des paramètres du véhicule (20) qui ont été saisis.

10. Système de commande (90) selon la revendication 9, dans lequel le dispositif de calcul (91) est en outre configuré pour déterminer la position et/ou l'orientation de la caméra virtuelle (72) librement mobile à l'aide de données générées par les capteurs et/ou à l'aide de paramètres du véhicule (20) qui ont été saisis.

11. Système de commande (90) selon l'une des revendications 7 ou 8, présentant un système (94) d'assistance au conducteur configuré pour commander une fonction du véhicule (20) à l'aide des représentations qui ont été formées.

12. Système de commande (90) selon l'une des revendications 7 à 11, dans lequel le dispositif de sortie (92) comprend un dispositif d'affichage sur lequel les représentations qui ont été formées peuvent être présentées au conducteur du véhicule (20) .

13. Véhicule (20) doté d'un système de commande (90) selon l'une des revendications 7 à 12.
